# EUROPÄISCHE PATENTSCHRIFT

(11) **EP 3 330 200 B1**
(45) Veröffentlichungstag und Bekanntmachung des Hinweises auf die Patenterteilung: **01.04.2020**
(21) Anmeldenummer: 17204231.9
(22) Anmeldetag: 28.11.2017
(51) Int. Cl.: B65G 1/04, B65G 1/137

(54) **VERFAHREN ZUM EIN- UND AUSLAGERN VON GEGENSTÄNDEN SOWIE LAGERSYSTEM ZUR DURCHFÜHRUNG DES VERFAHRENS**
METHOD FOR STORING AND RETRIEVING OBJECTS, AND STORAGE SYSTEM FOR CARRYING OUT THE METHOD
PROCÉDÉ DE STOCKAGE ET DE DISTRIBUTION D'OBJETS AINSI QUE SYSTÈME DE STOCKAGE PERMETTANT LA MISE EN UVRE DUDIT PROCÉDÉ

(30) Priorität: 01.12.2016 CH 15772016
(43) Veröffentlichungstag der Anmeldung: 06.06.2018
(73) Patentinhaber: WRH Walter Reist Holding AG, 8272 Ermatingen (CH)
(72) Erfinder: Bretz, Markus, 8704 Herrliberg (CH)
(74) Vertreter: IPrime Rentsch Kaelin AG

(56) Entgegenhaltungen:
- WO-A1-95/23750
- WO-A1-03/019425
- CH-A- 425 635
- FR-A1- 2 115 486
- JP-A- S5 244 978

## Beschreibung

### Technisches Gebiet

Die vorliegende Erfindung bezieht sich auf das Gebiet der Lagertechnik. Sie betrifft ein Lagersystem sowie ein Verfahren zum Betreiben des Lagersystems.

**Technologischer Hintergrund** Wenn eine Vielzahl von unterschiedlichen Gegenständen oder Waren in einem Lager vorgehalten und bei Bedarf wieder ausgelagert und dann meist zur Kommissionierung weitergeleitet werden müssen, muss die Lagerung kostengünstig sein und das Ein- und Auslagern möglichst automatisch und schnell erfolgen, um rentabel zu sein.

Es sind daher in der Vergangenheit viele verschiedene Konzepte vorgeschlagen und auch realisiert worden, um den gestellten Anforderungen zu genügen.

Die Druckschrift DE 25 10 147 A1 offenbart ein Verfahren und eine Vorrichtung zum Ein- und Auslagern von Waren in bzw. aus Lagerhallen, insbesondere für schnellen Umschlag von grossen Warenmengen, bei dem die Lagerhallen vorzugsweise mit ihrer gesamten Länge und Höhe einnehmenden Regalkanälen ausgestattet sind, wobei die einzulagernden Waren jeweils in grösseren Mengen nach ihrer Unterschiedlichkeit sortiert werden und dann an ein erstes von miteinander zusammenarbeitenden, kontinuierlich angetriebenen Fördermitteln herangebracht, von diesen - zentral gesteuert - automatisch aufgenommen und über weitere Fördermittel in für sie vorgesehene Regalkanäle gebracht werden, wobei nur gleiche Waren in den einzelnen Regalkanälen gelagert werden, und wobei die Auslagerung der Waren durch umgekehrte Arbeitsweise der gleichen Fördermittel, vorzugsweise jedoch nur an der Rückseite der Regalkanäle vorgesehene, nur der Auslagerung dienende, ebenfalls automatisch und kontinuierlich arbeitende Fördermittel erfolgt, wobei die jeweils unterschiedlichen Waren einzeln, doch ununterbrochen wieder aus den entsprechenden Regalkanälen abgerufen und auf einem Ladeplatz zum Abtransport zusammengestellt werden.

Die Druckschrift WO 94/06708 A1 beschreibt ein Lagersystem zum Ein- und Auslagern von insbesondere grossvolumigen Lagergütern wie Containern und dergleichen, mit mindestens einer, vorzugsweise mehreren Lagerebenen, wobei die Lagerebenen aus parallel zueinander verlaufenden, einzeln antreibbaren, endlos umlaufenden Horizontalförderern mit Stellplätzen für die Lagergüter bestehen, wobei die vorderen und hinteren Enden etwa miteinander fluchten und jeder Lagerebene mindestens zwei quer zur Längserstreckung bzw. Laufrichtung der Horizontalförderer angeordnete Transporteinrichtungen für die Lagergüter zugeordnet sind, von denen eine vor dem vorderen und die andere hinter dem hinteren Ende der Horizontalförderer angeordnet ist, und wobei die Transporteinrichtungen die Lagergüter quer zu den Horizontalförderern verfahren und einzeln von den Horizontalförderern übernehmen bzw. an diese übergeben können.

Die Druckschrift EP 0 654 425 A1 Verfahren zum Ein- oder Auslagern bzw. Umstapeln von Trägern mit Fördergut unterschiedlicher Abmessungen, insbesondere beladenen oder unbeladenen Frachtcontainern in bzw. aus einem mehretagigen Lager mit mindestens einem in einer Fahrgasse des Lagers verfahrbaren Regalförderzeug und mindestens einer neben der Fahrgasse befindlichen Regalseite mit Stellplätzen zur endständigen Lagerung der Träger für Fördergut, wobei nach einem Positionieren des beladenen oder unbeladenen Trägers für Fördergut auf dem Regalförderzeug auf eine der endständigen Position in einem Regalfach entsprechende Position der Träger zielgerecht im Regalfach durch das Regalförderzeug abgelegt wird.

Die Druckschrift DE 299 00 899 U1 offenbart ein Lagersystem für ein Verteilzentrum von Waren, insbesondere von Lebensmitteln und Kaufhauswaren, wobei das Lagersystem einen Wareneingang, einen Warenausgang und ein oder mehrere Hochregale zur Aufnahme von Trägern für die Waren aufweist, wobei das Lagersystem mindestens ein automatisches Regalbediengerät zum Handhaben der Träger und mindestens ein benachbartes automatisches Vereinzelungsgerät für die Waren aufweist.

Die Druckschrift DE 10 2005 045 971 A1 beschreibt ein Verfahren zur Kommissionierung in einer Kommissionieranlage mit fördertechnischen Anschlüssen an einen Versandbereich und an ein Artikellager, in dem unterschiedliche Artikel jeweils in Artikelbehältern gelagert sind, mit mindestens einem Kommissionierplatz, zu dem Artikelbehälter zwecks auftragsspezifischer Entnahme von Artikeln mittels erster Fördereinrichtungen hin und wieder zurück transportiert werden, wobei die Artikelbehälter dem Kommissionierplatz jeweils in einer zur Kommissionierung der Aufträge vorgegebenen Reihenfolge zugeführt werden, ferner mit mindestens einem Pufferspeicher im Nahbereich des Kommissionierplatzes für Kundenbehälter, in denen die entnommenen Artikel auftragsspezifisch abgelegt werden, wobei der Pufferspeicher über zweite Fördereinrichtungen einerseits mit dem Versandbereich und andererseits mit dem Kommissionierplatz verbunden ist, und mit einer Zuführeinrichtung zum Kommissionierplatz für leere Kundenbehälter und mit einer Abführeinrichtung für fertig kommissionierte Kundenbehälter, wobei zwecks Gewährleistung einer unterbrechungsfreien Kommissioniertätigkeit am mindestens einen Kommissionierplatz die Artikelbehälter und die Kundenbehälter dem jeweiligen Kommissionierplatz zeitlich so gesteuert zugeführt und von diesem wieder abgeführt werden, dass zumindest während längerer Betriebsphasen, insbesondere während der gesamten Betriebszeit, fortlaufend mindestens ein zu befüllender Kundenbehälter und mindestens ein Artikelbehälter, der zumindest einen für den dem mindestens einen Kundenbehälter jeweils zugeordneten Auftrag noch benötigten Artikel enthält, am Kommissionierplatz jeweils in Arbeitsposition bereitstehen.

Die Druckschrift DE 20 2008 010 880 U1 befasst sich mit einer Kommissionieranlage mit einem Kommissionierautomaten und beigeordnetem Durchlaufregal als Vorrat zum Nachfüllen des Kommissionierautomaten mit Stückgut, wobei zumindest eine angetriebene Förderstrecke vorzugsweise in Form einer Staurollenbahn, zumindest ein Durchlaufregal mit geneigten Durchlaufkanälen in mehreren Regaletagen, vorzugsweise drei bis fünf Regaletagen, deren Ausgänge von einer Bedienungsperson erreichbar sind, mit jeweils einem verfahrbaren, schienengeführten Etagenbediengerät in jeder Regaletage zum automatischen Befüllen der Durchlaufkanäle mit Behälter/Kartons, die vorzugsweise sortenreines Stückgut enthalten, mit zumindest einem stationären Lift in einem Anschluss an die Förderstrecke für einen automatischen Transport der Behälter/Kartons von der Förderstrecke in jede ausgewählte Regaletage, und mit einer Pufferstrecke in jeder Regaletage in einem Anschluss an den Lift für eine automatische Übernahme der Behälter/Kartons vom Lift, deren Ausgang vom Etagenbediengerät automatisch anfahrbar ist, wobei das Etagenbediengerät jeweils einen Behälter/Karton für einen Horizontaltransport zum Eingang eines ausgewählten Durchlaufkanals übernehmen kann.

Die Druckschrift DE 20 2008 010 881 U1 offenbart ein Versandregal, vorzugsweise in einer Kommissionieranlage zur Aufnahme und Ausgabe von Behältern, mit neben- und übereinander angeordneten Rampen, deren Ausgänge von Hand einer Bedienungsperson erreichbar und an deren Befüllseite Zufuhr- und Befülleinrichtungen angeordnet sind, wobei nebeneinander angeordnete Rampen jeweils eine Regaletage des Versandregals bilden, wobei eine Behälter-Zuführstrecke an einen Lift des Versandregals angeschlossen ist, der einen zugeführten Behälter in eine ausgewählte Regaletage befördert, und in jeder Regaletage ein eigenes schienengeführtes quer zu den Eingängen der Rampen verfahrbares Etagenbediengerät für einen Transport des zugeführten Behälters zu einer ausgewählten Rampe und ein Befüllen der ausgewählten Rampe mit dem zugeführten Behälter vorgesehen ist.

Die Druckschrift DE 10 2008 027 376 A1 schlägt eine Vorrichtung zum Ein- und Auslagern von Gütern, insbesondere von Arzneimittelpackungen, vor, mit mindestens einem Bereitstellungsplatz, auf dem die Güter bereitgestellt werden, mit mindestens einem Regal mit Lagerplätzen zur Lagerung der Güter und mit mindestens einem Regalbediengerät zum Anfahren des Bereitstellungsplatzes und der Lagerplätze, wobei das Regalbediengerät mindestens eine Aufnahmevorrichtung zur Aufnahme eines oder mehrere der Güter aufweist, sowie eine durch eine Steuerung automatisierte Reinigung oder Vorbereitung zur Reinigung des Lagers, der Güter oder der Kommissioniervorrichtung.

Die Druckschrift WO 2010/017873 A1 beschreibt ein Verfahren zum manuellen Kommissionieren von Stückgut in einer Kommissionieranlage mit einem Durchlaufregal als Vorrat zum manuellen Kommissionieren, wobei das Stückgut vorzugsweise sortenrein in Behältern oder Kartons auf einer angetriebenen Förderstrecke zum Durchlaufregal automatisch transportiert und nach Lesung und Erkennung über einen angesteuerten stationären Lift und angesteuerte Etagenbediengeräte des Durchlaufregals in ausgewählten Durchlaufkanälen des Durchlaufregals mit von einer Kommissionierperson manuell erreichbaren Ausgängen automatisch eingebracht wird, und Stückgut aus einem Behälter/Karton an einem ausgewählten Ausgang eines Durchlaufkanals von der Kommissionierperson an ihrem Kommissionier-Arbeitsplatz auftragsbezogen einem bereitgestellten Auftragsbehälter zugeführt wird.

Die Druckschrift DE 10 2009 017 241 A1 offenbart ein Lagersystem zur Unterbringung von Gütern in von Bedienfahrzeugen erreichbaren Lagerpositionen, wobei das Lager mit in Horizontalebenen angeordneten Lagerpositionen ausgerüstet ist, die über horizontale Bedienebenen mit vertikalem Zugriff von Bedienungsgeräten beaufschlagbar sind.

Ein ähnliches System ist auch aus der Druckschrift WO 2014/075937 A1 bekannt.

Im Einzelnen ist weiterhin aus der Druckschrift DE 10 2004 063 588 A1 ein Regalbediengerät zum Ein- und Auslagern von Einheitsladungsträgern in ein bzw. aus einem Hochregallager bekannt, mit einem Fahrwerk zur horizontalen Bewegung innerhalb einer Lagergasse des Hochregallagers, mit einem an einer Vertikalführung verfahrbaren Hubtisch, der mit einer einzigen Transfereinheit zum Ein- und Auslagern eines Ladungsträgers in eine bzw. aus einer Lagerstelle des Hochregallagers versehen ist, und mit einer die Antriebe des Regalbediengeräts steuernden elektronischen Steuerung, wobei der Hubtisch für den Transport von Ladungsträgern zwischen Einlagerbereich, Lagerstelle und Auslagerbereich des Hochregallagers mit einem Pufferspeicher zur Aufnahme mindestens eines zusätzlich zu einem im Bereich der Transfereinheit aufnehmbaren Ladungsträgers versehen ist, wobei der Pufferspeicher derart ausgebildet ist, dass zum Einlagern in das Hochregallager der mindestens eine zusätzliche Ladungsträger in den Arbeitsbereich der Transfereinheit und umgekehrt zum Auslagern aus dem Arbeitsbereich der Transfereinheit in den Pufferspeicher überführbar ist.

Die Druckschrift CH 710 851 A1, auf die weiter unten Bezug genommen wird, betrifft einen Sortierförderer zum Fördern und Abgeben von Fördergütern, enthaltend eine entlang einer geschlossenen Förderbahn bewegbare Fördereinheit mit einem Förderwagen und einem auf dem Förderwagen angeordneten Kippförderelement, welches für die Abgabe eines Fördergutes aus einer Beladestellung in eine Kippstellung gekippt werden kann, wobei der Sortierförderer entlang der Förderbahn eine Beladezone und eine in Förderrichtung mittelbar auf die Beladezone folgende Abgabezone mit mindestens zwei Abgabestationen ausbildet. Das Kippförderelement ist zu einer ersten Kippseite hin in eine erste Kippstellung und zu einer zweiten Kippseite hin in eine zweite Kippstellung kippbar. Der Sortierförderer umfasst entlang der Förderbahn in Förderrichtung betrachtet nach der Beladezone und vor der Abgabezone eine Kippzone mit einer Kippeinrichtung, zum Kippen des Kippförderelements in die erste oder zweite Kippstellung.

DE 102010010433 A1 zeigt ein Regalsystem zum Ein- und Auslagern von Lagergütern für eine Kommissionieranlage mit einem Regal, das mindestens einen Regalblock aufweist, wobei jeder Regalblock mehrere übereinander angeordnete Regalebenen aufweist, die jeweils eine Vielzahl von horizontal nebeneinander angeordneten Regallagerplätzen zur jeweiligen Pufferung eines Lagerguts im Regal aufweisen. Ein vertikal und horizontal verfahrbares Regalbediengerät ist an einer Längsseite des Regals angeordnet, um mit seinem Lastaufnahmemittel ein Lagergut an einen der Regallagerplätze abzugeben oder um ein Lagergut aus einem der Regallagerplätze abzuholen, wobei das Regalbediengerät jeden Regallagerplatz entlang der Längsseite des Regals zum Zwecke eines Lagerguttransfers anfahren kann. Eine horizontal orientierte Lagergut-Fördertechnik erstreckt sich im Wesentlichen parallel zu den Regalebenen und verläuft oberhalb und/oder unterhalb von jedem Regalblock und an jeden Regalblock angrenzend. Da jeder Regalblock nur eine vertikale Schicht umfasst, ist die Volumenausnützung eines solchen Regalsystems vergleichsweise schlecht.

DE 102007016453 A1 zeigt ein automatisiertes Kommissioniersystem, mit welchem Artikeleinheiten in einer vorbestimmten Reihenfolge zu einem Arbeitsplatz befördert werden können, mit einem Lagerregal mit einer Vielzahl von Lagerplätzen zur Aufnahme von Lagereinheiten, auf denen oder in denen Artikeleinheiten vorzugsweise sortenrein gelagert sind. Das Lagerregal ist in Regalbereiche unterteilt ist, wobei jeder Regalbereich eine Vielzahl von Regalebenen aufweist, die jeweils eine Vielzahl von nebeneinander angeordneten Lagerplätzen umfassen. Ein Zentralförderband ist entlang der Längsseite zwischen zwei Lagerregalen angeordnet. Es können auch mehrere Zentralförderbänder übereinander angeordnet sein. Mehrere Vertikallifte sind hintereinander an der Längsseite des Lagerregals angeordnet und weisen jeweils ein Lastaufnahmemittel zur Aufnahme und Abgabe von mindestens einer Lagereinheit auf. Eine Vielzahl von horizontal verfahrbaren Lagermaschinen sind zwischen zwei vertikalen Regalschichten angeordnet, um Lagereinheiten aus dem Regal zu entnehmen, und an einem Übergabeplatz zu deponieren, wo die Lagereinheiten von einem zugeordneten Vertikallift übernommen werden können. Die Vertikallifte bringen die Waren auf das Niveau des Zentralförderers, wo die Lagereinheiten von Förderbahnen horizontal zum Zentralförderer gefördert werden. Die Lagereinheiten werden in einer vorbestimmten Reihenfolge auf dem Zentralförderband deponiert, um so eine sortierte Zusammenstellung eines Kommissionierauftrags zu erhalten. Dieses automatisierte Kommissioniersystem weist einen sehr komplexen Aufbau auf, mit einer Vielzahl unterschiedlicher beweglicher Einheiten, die zusammenwirken müssen.

Trotz einer Vielzahl von bekannten Lösungsvorschlägen für Ausgestaltung und Betrieb eines Hochregallagers besteht nach wie vor der Wunsch nach einem solchen Lager, das bei vergleichsweise einfachem Aufbau einerseits ein schnelles und zielgenaues Einlagern ermöglicht und gleichzeitig ein effizientes Auslagern mit besonderen Vorteilen für eine anschliessende Kommissionierung der Lagerwaren fördert.

CH 425635 A zeigt eine Lageranlage und ein Verfahren zum Betrieb derselben, mit automatisch gesteuerten Transportmitteln zum Einlagern und Auslagern der Ware in bzw. aus mindestens einer Lagereinheit. Die Lageranlage ist gekennzeichnet durch die Aufteilung der Transportmittel in eine der Lagereinheit zugeordnete Lagermaschine und eine an einer Umschlagstelle der Lagereinheit vorbeiführende Bahn mit einer Mehrzahl unabhängiger Transporteinheiten, wobei längs der Bahn ortsfeste Ablesestellen für den Transporteinheiten beigegebene Informationsträger zur Steuerung der Bahn, der Transporteinheiten und der Lagermaschine angeordnet sind.

FR2115486 zeigt ein Lagersystem nach dem Oberbegriff des Anspruchs 1.

### Darstellung der Erfindung

Es ist daher eine Aufgabe der Erfindung, ein Lagersystem zu schaffen, das diesen Wunsch erfüllt und insbesondere im Zusammenhang mit einer Kommissionierung der ausgelagerten Waren einen schnellen Betrieb mit vereinfachter Zusammenstellung der Waren ermöglicht.

Es ist weiterhin eine Aufgabe der Erfindung, ein Verfahren zum Betrieb eines solchen Lagersystems anzugeben.

Die Aufgabe wird durch die Merkmale der Ansprüche 1 und 10 gelöst. Weitere vorteilhafte Ausführungsformen sind in den abhängigen Ansprüchen gegeben.

Die erfindungsgemässe Lösung kann durch verschiedene, jeweils für sich vorteilhafte und, sofern nicht anders ausgeführt, beliebig miteinander kombinierbare Ausgestaltungen weiter verbessert werden. Auf diese Ausführungsformen und die mit ihnen verbundenen Vorteile ist im Folgenden eingegangen.

Das Lagersystem nach der Erfindung umfasst die Merkmale des Anspruchs 1.

Dies ermöglicht eine schnellere und vereinfachte Einlagerung und insbesondere Auslagerung des Lagerguts.

Unter einer stetig geschlossenen Schlaufe eines Förderers wird im Zusammenhang mit der Beschreibung der Erfindung ein Transportpfad eines Förderers verstanden, bei welchem ein Objekt auf dem Förderer ausgehend von einem Ursprungspunkt nach den Transport entlang des Transportpfads stetig gefördert wieder am Ursprungspunkt anlangt, also stetig umlaufend gefördert werden kann. Der Transportpfad kann horizontal verlaufen, aber auch positive und negative Steigungen enthalten, Spiralen, Schleifen, topologische Knoten etc.

Eine Ausgestaltung des erfindungsgemässen Lagersystems ist dadurch gekennzeichnet, dass das Lagersystem mindestens eine Kommissionierungseinheit zur individuellen Zusammenstellung ausgelagerter Lagergüter umfasst, und dass der Förderer an der Kommissionierungseinheit entlang bzw. durch die Kommissionierungseinheit hindurchgeführt ist. In der Kommissionierungseinheit können auf bekannte Weise verschiedene ausgelagerte Waren zu einer Sendung zusammengestellt werden, um dann gemeinsam weiterverarbeitet, z.B. versandt zu werden. In der Kommissionierungseinheit können in Laufrichtung des Förderers mehrere Kommissionierungsplätze hintereinander angeordnet sein, die dann gemeinsam von dem einen Förderer bedient werden. Hierdurch ergibt sich insgesamt eine erhebliche Vereinfachung in der Förderlogistik.

Auch kann das Lagersystem mindestens eine Übergabestation zur Eingabe von einzulagernden Lagergütern in das Lagersystem umfassen, wobei der Förderer an der Übergabestation entlang bzw. durch die Übergabestation hindurchgeführt ist. Es ist aber auch denkbar, im Falle einer Kommissionierungseinheit mit entsprechenden Kommissionierungsplätzen einen oder mehrere dieser Kommissionierungsplätze zur Eingabe von einzulagernden Lagergütern zu verwenden und/oder umzugestalten.

Das Zusammenspiel von Handlinggeräten und Förderer kann in einem Lagersystem, welches nicht Teil der Erfindung ist, verwirklicht sein, bei dem die verschiedenen Lagerplätze nur auf einer einzigen Lagerebene verteilt angeordnet sind. Der Förderer wird dann in dieser Lagerebene durch das Lagersystem geführt und die Handlinggeräte sorgen dann für die Verteilung des Lagergutes in der Ebene bzw. führen das auszulagernde Lagergut von den Lagerplätzen ausgehend dem Förderer zu. Erfindungsgemäß sind mehrere solcher Ebenen übereinander angeordnet und werden durch entsprechende Handlinggeräte bedient.

Erfindungsgemäß sind die Lagerplätze auf übereinander liegenden Lagerebenen in Hochregalen angeordnet, welche unter Ausbildung von Lagergassen mit Abstand nebeneinander stehen, wobei in den Lagergassen zwischen den Hochregalen als Handlinggeräte horizontal und vertikal verfahrbare Regalbediengeräte vorgesehen sind, mit welchen jeder der Lagerplätze zum Ein- und/oder Auslagern von Lagergut angefahren werden kann, und wobei der Förderer wenigstens einmal auf einer Lagerebene durch die Hochregale geführt ist.

Der alle Bereiche des Hochregallagers durchziehende Förderer sammelt auf einer einzigen Förderstrecke alle ausgelagerten Lagergüter oder Waren und transportiert sie zur weiteren Verarbeitung, z.B. Kommissionierung, an einen bestimmten Ort vor dem Lager. Das Lagergut wird dazu von den Regalbediengeräten aus den angefahrenen Lagerplätzen abgeholt und auf den Förderer befördert. Durch eine geschickte Steuerung dieser Vorgänge kann bereits auf dem Förderer die Reihenfolge der ausgelagerten Lagergüter bzw. Waren so gewählt werden, dass sie bei der Weiterverarbeitung (Kommissionierung) an den jeweiligen Kommissionierungsplätzen in einer zeitsparenden Ordnung zur Verfügung stehen.

Gleichzeitig kann der Förderer aufgrund seiner Länge als Zwischenspeicher zur Verfügung stehen und benutzt werden, um Lagergut, das bei der täglichen Weiterverarbeitung schnell zur Verfügung stehen muss, z.B. bereits in der Nacht vorher auf das Lagerband auszulagern und so schnell bereitzustellen.

Besonders zeitsparend kann der Ein- und Auslagerungsprozess im Falle von Hochregallagern gestaltet werden, wenn die Lagerebenen, durch welche der Förderer geführt ist, sich etwa auf halber Höhe der Hochregale befinden. In diesem Fall werden lange Wege für die Regalbediengeräte vermieden.

Die Hochregale weisen erfindungsgemäß quer zur Lagergasse in einer Lagerebene jeweils zwei hintereinander angeordnete Lagerplätze auf, wobei der Förderer auf der jeweiligen Lagerebene parallel zur Lagergasse durch das jeweilige Hochregal geführt ist, und in den Lagerebenen, auf denen der Förderer durch das jeweilige Hochregal geführt ist, neben dem Förderer nur eine Reihe von Lagerplätzen vorgesehen ist. Auf diese Weise lässt sich der Förderer optimal selbst in bereits bestehende Hochregale integrieren, ohne dass grössere Umbauten am Regal selbst durchgeführt werden müssen. Insbesondere bleiben die Lagergassen frei, so dass dort die Regalbediengeräte ungehindert alle Lagerplätze anfahren können. Gleichzeitig steht für den Austausch der Lagergüter zwischen Förderer und Lagerebene die gesamte Länge der Lagerebene in Laufrichtung des Förderers zur Verfügung.

Vorzugsweise sind die Handlinggeräte so ausgebildet und angeordnet, dass sie Lagergut von jedem der Lagerplätze abholen und an den Förderer übergeben können. Auf diese Weise können durch das Zusammenspiel zwischen dem Förderer und den Handlinggeräten alle Lagerplätze des Lagersystems zum Auslagern schnell und einfach angewählt und eingesetzt werden.

Weiterhin kann zur Übergabe von Lagergut von einem Handlinggerät an den Förderer wenigstens ein Zwischenförderer vorgesehen sein, welcher das Lagergut vom Regalbediengerät übernimmt und auf den Förderer weiterbefördert. Als Zwischenförderer kommt beispielsweise ein Bandförderer in Betracht. Der wenigstens eine Zwischenförderer kann grundsätzlich ohne Antrieb auskommen. Er kann insbesondere aber auch antreibbar sein.

Für die Einlagerung von Lagergut können die Handlinggeräte so ausgebildet und angeordnet sein, dass sie Lagergut von dem Förderer übernehmen und zu jedem der Lagerplätze des Lagersystems transportieren und dort ablegen können. Auf diese Weise können durch das Zusammenspiel zwischen dem Förderer und den Handlinggeräten alle Lagerplätze des Lagersystems zum Einlagern schnell und einfach angewählt und eingesetzt werden.

Insbesondere kann der Förderer eine endlos umlaufende, stetig geschlossene Schlaufe bildende Förderkette umfassen, an der Vorrichtungen zur Aufnahme von Lagergut befestigt sind. Ein solcher Kettenförderer, z.B. ein Plattenkettenförderer oder Mattenkettenförderer oder Schuhförderer oder Schalenförderer oder Quergurtförderer, ermöglicht einen robusten und ausfallfreien Betrieb des Systems selbst bei grösseren Lasten. Die Förderkette kann aber auch aus einzelnen Förderwagen bestehen, die untereinander verkettet sind. Dabei können die Vorrichtungen zur Aufnahme von Lagergut auf der Oberseite der Förderkette in Laufrichtung hintereinander, vorzugsweise überlappend, angeordnete Platten umfassen, auf denen das Lagergut zum Transport abgelegt werden kann.

Die Vorrichtungen zur Aufnahme von Lagergut auf der Oberseite der Förderkette können aber auch in Laufrichtung der Förderkette hintereinander angeordnete Transportschalen umfassen, auf welchen das Lagergut zum Transport abgelegt werden kann.

Insbesondere können die Vorrichtungen so ausgebildet sein, dass darin befindliches Lagergut quer zur Förderrichtung, insbesondere seitlich, entladbar ist.

Es kann weiterhin vorgesehen sein, dass die Vorrichtungen seitlich gekippt werden können. Hierdurch wird eine besonders einfache, schwerkraftgestützte Entladung ermöglicht. Zur Unterstützung des Auskippens können im Regal zusätzlich Rutschen angeordnet sein, auf denen das ausgekippte Lagergut an seinen Lagerplatz rutscht.

Die Handlinggeräte zum Einlagern und Auslagern von Lagerobjekten umfassen vorteilhaft eine Transfervorrichtung, mit welcher ein Lagerobjekt von einem Lagerplatz im übernommen werden kann oder das Lagerobjekt an einen Lagerplatz platziert werden kann. Für diesen Zweck sind beispielsweise aus der Hochregaltechnik verschiedene Möglichkeiten bekannt. Die konkret vorteilhafteste Wahl der Transfervorrichtung hängt dabei jedoch von der Art des Lagerbehälters oder Lagerobjekts und des Lagersystems ab.

Für Lagerobjekte mit nicht standardisierter Form, beispielsweise Pakete, ist die Einlagerung in ein Lagersystem schwieriger. Das gleiche gilt auch für die Übernahme solcher Lagerobjekte vom Förderer bzw. die Übergabe der Lagerobjekte an den Förderer. Ebenfalls schwieriger ist das Handling von Lagerobjekten, unabhängig von deren Form, bei Fördersystemen, bei welchen Position und Ausrichtung der geförderten Lagerobjekte nicht vorgegeben ist und variieren kann. Als Beispiel ist hier ein Transportband zu nennen, bei welchem die Lage des Lagerobjekts auf dem Transportband aber auch die Ausrichtung sich während dem Transport verschieben kann.

In einer vorteilhaften Variante eines erfindungsgemässen Lagersystems umfasst das Handlinggerät eine Robotervorrichtung. Dies hat insbesondere den Vorteil, dass keine exakte und regelmässige Anordnung der zugeförderten Lagerobjekte notwendig ist, da der Roboterarm sich mit Hilfe von entsprechenden Sensoren, insbesondere optischen Sensoren, der tatsächlichen Position und Ausrichtung des Lagerobjekts auf dem Förderer oder am Lagerplatz anpassen kann.

Eine Transfereinheit, insbesondere eine Robotervorrichtung, kann auch Mittel zur Identifikation eines Lagerobjekts umfassen, beispielsweise Sensoren zum Auslesen von RFID-Elementen oder zum Lesen von Beschriftungen oder ein-oder zweidimensionalen Codierungen, beispielsweise Bar-Codes oder QR-Codes. Dies erlaubt es beispielsweise, vor dem Einlagern und Auslagern die Identität eines bestimmten Lagerobjekts zu überprüfen.

Das erfindungsgemässe Verfahren umfasst die Merkmale des Anspruchs 10.

Im Falle des Hochregallagers ist das erfindungsgemässe Verfahren zum Betreiben des Lagersystems dadurch gekennzeichnet, dass zum Einlagern von Lagergut im Lagersystem das Lagergut mit dem Förderer in die dem Förderer zugeordnete Lagerebene des jeweiligen Hochregals transportiert und dort im Hochregal abgelegt und bei Bedarf mit einem der Handlinggeräte in eine andere Lagerebene und/oder ein anderes Hochregal verlagert wird, und dass zum Auslagern von Lagergut das Lagergut mit einem der Handlinggeräte von seinem Lagerplatz im Hochregal in eine dem Förderer zugeordnete Lagerebene transportiert und dort auf den Förderer aufgebracht wird.

Auch kann zum Auslagern von Lagergut das Lagergut mit einem der Handlinggeräte in der dem Förderer zugeordneten Lagerebene zunächst auf einem Zwischenplatz abgelegt werden. Ein solcher Zwischenplatz kann insbesondere ein Zwischenförderer sein, der dann auch den Weitertransport des Lagergutes auf den Förderer übernimmt.

Dabei kann es von Vorteil sei, wenn das Lagergut vom Zwischenplatz geordnet auf den Förderer übergeben wird. Eine geordnete Übergabe umfasst insbesondere, dass das Lagergut auf einer vorbestimmten Stelle des Förderers abgelegt wird.

Durch das Zusammenspiel zwischen dem Förderer und den Handlinggeräten wird ein schneller und zielführender Ein- und Auslagerungsprozess ermöglicht, der auch bei bereits vorhandenen Lagern bzw. Hochregallagern realisiert werden kann.

Eine Ausgestaltung des erfindungsgemässen Verfahrens ist dadurch gekennzeichnet, dass das ausgelagerte Lagergut mit dem Förderer zu einer Kommissionierungseinheit transportiert und dort vom Förderer abgenommen und im Rahmen einer Kommissionierung weiterverarbeitet wird.

Weiterhin kann der Förderer wegen seiner Länge mit Vorteil zur Zwischenlagerung von einzulagerndem und/oder ausgelagertem Lagergut verwendet werden.

Auch ist es denkbar, dass das ausgelagerte Lagergut auf dem Förderer in einer für die nachfolgende Kommissionierung optimierten Reihenfolge zwischengelagert wird. In diesem Fall werden die Handlinggeräte so gesteuert, dass die von ihnen auf dem Förderer abgelegten Lagergüter bereits in der gewünschten Reihenfolge aufgelegt sind.

Zur Lagerung des Lagerguts können dabei normierte Lagerbehälter verwendet werden, in welchen das Lagergut im Lagersystem eingelagert wird, wobei zum Einlagern bzw. Auslagern die Lagerbehälter von den Handlinggeräten aus den Lagerplätzen in den Hochregalen entnommen, mittels des Förderers zum Beladen bzw. Entladen transportiert und nach dem Beladen bzw. Entladen wieder zu einem der Lagerplätze zurückgebracht werden. In den Lagerbehältern können dabei gleichartige Waren aber auch unterschiedliche Waren aufbewahrt werden, die z.B. je nach Häufigkeit des Warenumschlags in bevorzugten Lagerplätzen eingelagert werden.

Zum Ablegen des Lagerguts auf einem Lagerplatz vom Förderer herunter kann das Lagergut quer zur Förderrichtung, insbesondere seitlich, entladen werden.

Weiterhin kann das Ablegen des Lagerguts auf einem Lagerplatz vom Förderer herunter durch ein schwerkraftgestütztes Ab- bzw. Auskippen erfolgen. Dies insbesondere dann, wenn auf dem Förderer entsprechende Vorrichtungen vorhanden sind, wie sie beispielsweise in der bereits eingangs erwähnten Druckschrift CH 710 851 A1 beschrieben sind.

Vorteilhaft wird das Lagergut vom Zwischenplatz geordnet auf den Förderer übergeben. Bei allen gezeigten Ausführungsformen eines erfindungsgemässen Lagersystems bzw. Verfahrens kann der Förderer auch für Umschichtungen von Lagerbehältern zwischen verschiedenen Lagergassen verwendet werden, um beispielsweise eine gleichmässige bzw. für kurze Zugriffszeiten optimale Verteilung der Lagerbehälter über das gesamte Lagersystem zu erreichen. Zu diesem Zweck können die Regalbediengeräte Lagerbehälter aus einer bestimmten Lagergasse entnehmen und auf dem umlaufenden Förderer deponieren, so dass sie nach Erreichen einer bestimmten anderen Lagergasse vom dortigen Regalbediengerät aufgenommen und an einem neuen Lagerplatz deponiert werden können.

Solche Optimierungsprozesse können separat zum normalen Betrieb durchgeführt werden, beispielsweise in Randzeiten, oder auch parallel zum Normalbetrieb, indem Lücken in der Auslastung des Förderers bzw. der Regalbedieneinheit genutzt werden, um ohne Auswirkungen auf den Normalbetrieb Lagerbehälter umzuschichten.

### Kurze Erläuterung der Figuren

Die Erfindung soll nachfolgend anhand von Ausführungsbeispielen im Zusammenhang mit der Zeichnung näher erläutert werden. Die im Folgenden gegebenen Beispiele werden zur besseren Veranschaulichung der vorliegenden Erfindung gegeben, sind jedoch nicht dazu geeignet, die Erfindung auf die hierin offenbarten Merkmale zu beschränken.

Es zeigen:
- Figur 1: in einer schematisierten Darstellung in der Draufsicht von oben ein Lagersystem gemäss einem Ausführungsbeispiel der Erfindung mit vier Hochregalen, durch die ein endloser Förderer geführt ist, der mit Regalbediengeräten in den Lagergassen zwischen den Hochregalen zusammenarbeitet;
- Figur 2: das Lagersystem aus Figur 1 in der vereinfachten Ansicht von vorne;
- Figur 3: in einer perspektivischen Ansicht ein Lagersystem gemäss einem anderen Ausführungsbeispiel der Erfindung mit einer im Detail dargestellten Kommissionierungseinheit;
- Figur 4: in der Draufsicht von oben die Kommissionierungseinheit aus Figur 3;
- Figur 5: einen Abschnitt eines Förderers mit auf einer Förderkette befestigten Segmenten, wie es zur Verwirklichung der Erfindung geeignet ist;
- Figur 6: einen Abschnitt des Bandes mit darauf transportierten Waren (z.B. Paketen);
- Figur 7: eine auf einer Förderkette befestigte, zu beiden Seiten abkippbare Lagerschale, wie sie zur Verwirklichung der Erfindung geeignet ist;
- Figur 8a: schematisch die Auslagerung eines Lagerbehälters auf ein Regalbediengerät;
- Figur 8b: schematisch das Einlagern eines Lagerbehälters einerseits vom Förderer aus und andererseits durch ein Regalbediengerät;
- Figur 8c: schematisch das Auslagern eines Lagerbehälters auf den Förderer und das gleichzeitige Einlagern mittels eines Regalbediengerätes;
- Figur 9a: schematisch das Entnehmen eines Lagerbehälters durch eine als Robotervorrichtung ausgestaltete Transfereinrichtung; und
- Figur 9b: schematisch das Einlagern eines Lagerbehälters durch eine weitere als Robotervorrichtung ausgestaltete Transfereinrichtung.

### Wege zur Ausführung der Erfindung

Grundsätzlich kann das erfindungsgemässe Zusammenspiel von Handlinggeräten und Förderer in einem Lagersystem verwirklicht sein, bei dem die verschiedenen Lagerplätze nur auf einer einzigen Lagerebene verteilt angeordnet sind. Der Förderer wird dann in dieser Lagerebene durch das Lagersystem geführt und die Handlinggeräte sorgen dann für die Verteilung des Lagergutes in der Ebene bzw. führen das auszulagernde Lagergut von den Lagerplätzen ausgehend dem Förderer zu. Nachfolgend wird die Erfindung jedoch speziell am Beispiel eines Hochregallagers erläutert. Es ist aber auch denkbar, dass mehrere solcher Ebenen übereinander angeordnet sind und durch entsprechende Handlinggeräte bedient werden.

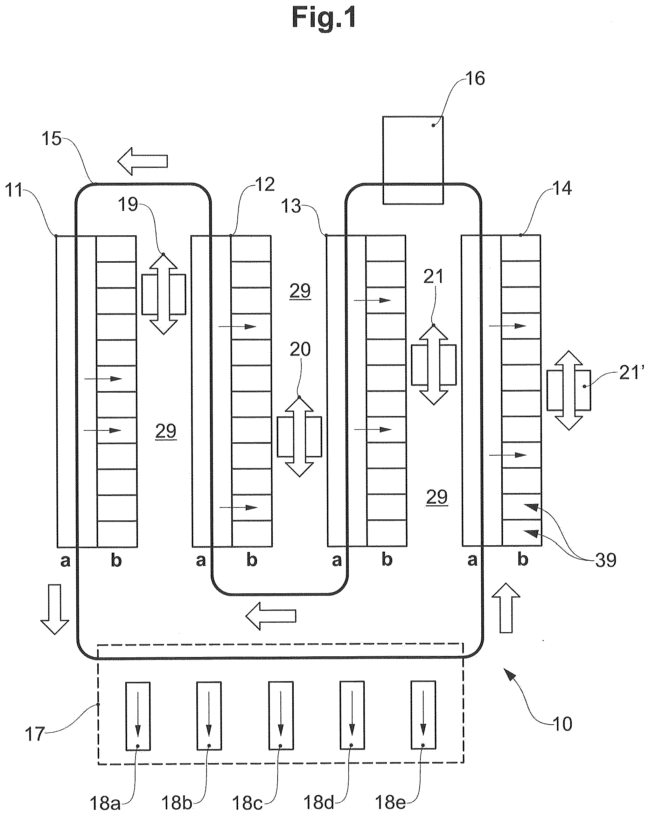

In Figur 1 ist in einer schematisierten Darstellung in der Draufsicht von oben ein Lagersystem 10 gemäss einem Ausführungsbeispiel der Erfindung wiedergegeben, mit vier Hochregalen 11, 12, 13 und 14, durch die ein endloser (geschlossener) Förderer 15 geführt ist, der mit Regalbediengeräten 19, 20 und 21 in den Lagergassen 29 zwischen den Hochregalen 11, 12, 13 und 14 zusammenarbeitet. Figur 1 zeigt einen Schnitt durch eine spezielle Ebene (in etwa der Mitte) des Hochregallagers, in der der Förderer durch die Hochregale 11, 12, 13 und 14 geführt ist. Es ist ersichtlich, dass der Förderer eine stetig geschlossene Schlaufe bildet. Ausserhalb der Lagergassen 29 kann z.B. ein weiteres Regalbediengerät 21' vorgesehen werden, wenn die aussenliegenden Lagerplätze 39 anders nicht zu erreichen sind.

Der Förderer 15 hat eine durch die Pfeile markierte bevorzugte Förder- oder Laufrichtung und führt insbesondere ausserhalb des eigentlichen Lagers durch eine davor platzierte Kommissionierungseinheit 17, in welcher ausgespeicherte bzw. ausgelagerte Waren oder Lagergüter an einzelnen Übernahmestationen oder Kommissionierungsplätzen 18a bis 18e vom Förderer 15 abgenommen und weiterverarbeitet, z.B. zu Warensendungen oder Warenlieferungen zusammengestellt werden. Der Förderer 15 kann prinzipiell aber auch in der anderen Richtung oder in wechselnden Richtungen betrieben werden. Der notwendige Antrieb und die zugehörige Steuerung des Förderers 15 sind in der Figur 1 der Einfachheit halber nicht gezeigt.

Zum Einlagern der Waren in die Hochregale 11, 12, 13 und 14 kann am Förderer 15 an anderer Stelle eine Übergabestation 16 vorgesehen werden, über die Lagergut auf den Förderer 15 gebracht und mittels des Förderers 15 in ein dafür ausgesuchtes Hochregal transportiert werden kann. Das Lagergut wird dort dann vom Förderer 15 abgeladen und kann von einem zugeordneten Regalbediengerät 19, 20 oder 21 auf einem dafür vorgesehenen Lagerplatz 39 im Regal abgelegt und damit eingelagert werden. Es ist dabei denkbar, dass das Lagergut direkt transportiert und abgelegt wird oder in einem geeigneten Behälter (z.B. einem Kasten oder einer Kiste, auf einer Palette oder in einem Korb oder Container), gegebenenfalls zusammen mit anderen, gleichartigen oder auch unterschiedlichen Waren, transportiert und aufbewahrt wird. Zum Einlagern können aber auch ein oder mehrere der Kommissionierungsplätze 18a bis 18e verwendet werden, falls sie z.B. für die Kommissionierung gerade nicht gebraucht werden.

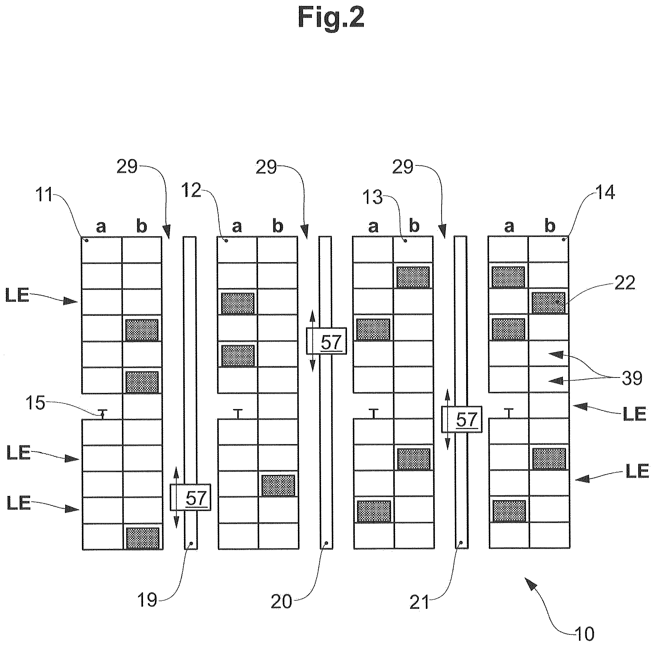

Wenn Lagergut von irgendeinem der Lagerplätze 39, die sich auf unterschiedlichen Lagerebenen (LE in Figur 2) befinden, ausgelagert werden soll, fährt eines der Regalbediengeräte 19, 20, 21, das auf diesen Lagerplatz zugreifen kann, diesen Lagerplatz an, nimmt dort mit der Transfervorrichtung 57 das dort gelagerte Lagergut auf und transportiert es zu einem Abschnitt des Förderers 15, auf den es Zugriff hat und legt es dort auf den Förderer 15 auf.

Wenn Lagergut auf irgendeinem der Lagerplätze 39, die sich auf unterschiedlichen Lagerebenen (LE in Figur 2) befinden, eingelagert werden soll, nimmt eines der Regalbediengeräte 19, 20, 21, das auf diesen Lagerplatz zugreifen kann, von dem Förderer 15 das herangeförderte gelagerte Lagergut auf und legt es dort ab.

Im gezeigten Ausführungsbeispiel der Figur 1 hat jedes der Hochregale 11, 12, 13 und 14 je zwei sich parallel zu den Lagergassen 29 erstreckende Regalhälften a und b. Wenn also z.B. aus einem Lagerplatz 39 in der Regalhälfte b des Hochregals 13 Lagergut zur Kommissionierung ausgelagert werden soll, fährt das Regalbediengerät 21 diesen linker Hand liegenden Lagerplatz an, entnimmt das gewünschte Lagergut, fährt auf das Niveau des Förderers 15 und übergibt dann das entnommene Lagergut an den rechter Hand durch die Regalhälfte a des Hochregals 14 geführten Förderer 15. Entsprechend werden andere Lagerplätze in anderen Hochregalen durch andere Regalbediengeräte bedient.

Figur 2 zeigt das Lagersystem 10 aus Figur 1 in der vereinfachten Ansicht von vorne. Hier wird ersichtlich, dass die Regalbediengeräte 19, 20 und 21 nicht nur in ihrer Lagergasse 29 in Längsrichtung verfahrbar sind, sondern selbstverständlich auch soweit in der Höhe verfahrbar sind, dass sie alle Lagerebenen LE der an der angrenzenden Hochregale erreichen und auf die dortigen Lagerplätze 39 zugreifen können. Eingezeichnet sind in Figur 2 auch auf verschiedenen Lagerebenen und Lagerplätzen entsprechende Lagerbehälter 22, in denen das Lagergut aufbewahrt wird. Figur 2 zeigt weiterhin, dass in diesem Beispiel der Förderer 15 in allen Hochregalen 11, 12, 13 und 14 auf dem gleichen Niveau (der gleichen Lagerebene LE) durch die Hochregale geführt ist. Im Beispiel liegt diese ausgezeichnete Lagerebene in etwa in der Höhenmitte der Hochregale, so dass die Regalbediengeräte 19, 20 und 21 von dem Förderer 15 ausgehend etwa gleich lange Wege zur untersten und zur obersten Lagerebene zurücklegen müssen. Es ist aber auch denkbar, den Förderer 15 in verschiedenen Hochregalen auf verschiedenen Lagerebenen durch das Regal zu führen. Weiterhin ist es denkbar, andere als die mittleren Lagerebenen für das Durchführen des Förderers 15 in einer Regalhälfte (in Figuren 1 und 2 in den Regalhälften a) freizuhalten.

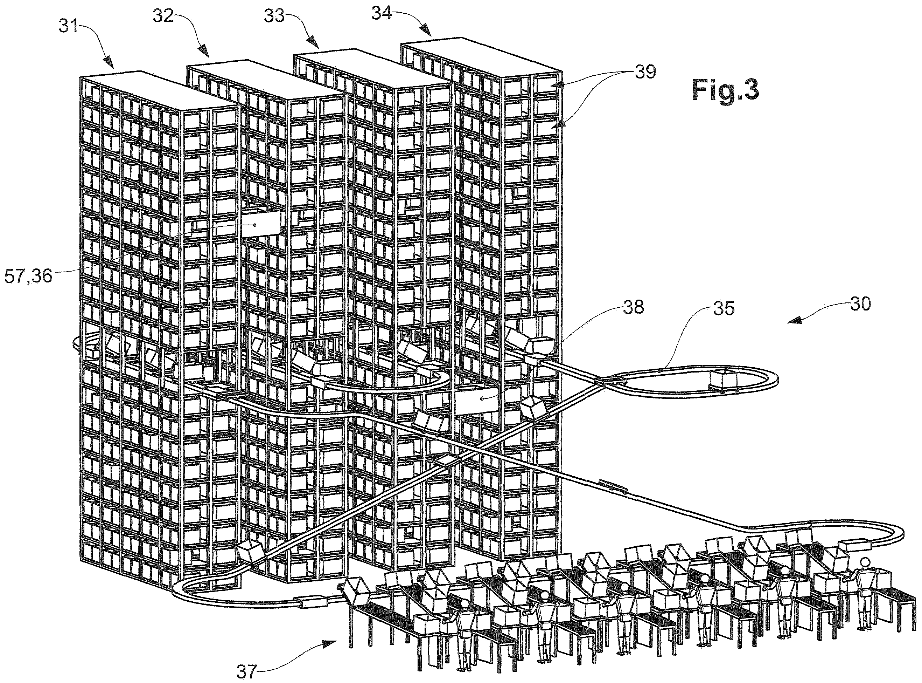

Figur 3 zeigt in einer perspektivischen Ansicht ein Lagersystem 30 gemäss einem anderen Ausführungsbeispiel der Erfindung mit einer im Detail wiedergegebenen Kommissionierungseinheit 37. Das Lagersystem 30 umfasst wiederum vier Hochregale 31, 32, 33 und 34 zwischen denen in den Lagergassen Regalbediengeräte 36, 38 verfahrbar angeordnet sind. Der Förderer 35 ist auch hier auf einer mittleren Lagerebene durch die Hochregale geführt, und bildet eine stetig geschlossene Schlaufe. Weiterhin ist der Förderer 35 in diesem Ausführungsbeispiel durch Ausbildung von Wendeschleifen und dergleichen in seiner Länge deutlich vergrössert. Dies hat unter anderem zur Folge, dass die gesamte Länge des Förderers 35 als optionaler Speicherplatz für ausgelagerte oder einzulagernde Waren verwendet werden kann. So ist es denkbar, in Zeiten (z.B. nachts), in denen in der Kommissionierungseinheit 37 keine Kommissionierung stattfindet, auf dem Förderer 35 in einer für die spätere Kommissionierung vorteilhaften Reihenfolge Lagergut abzulegen, das dann ohne grossen Zeitverlust bei Beginn der Kommissionierung weiterverarbeitet werden kann. Auf diese Weise lassen sich die Regalbediengeräte 36, 38 optimal ausnutzen und gerätebedingte Zeitverzögerungen geringhalten.

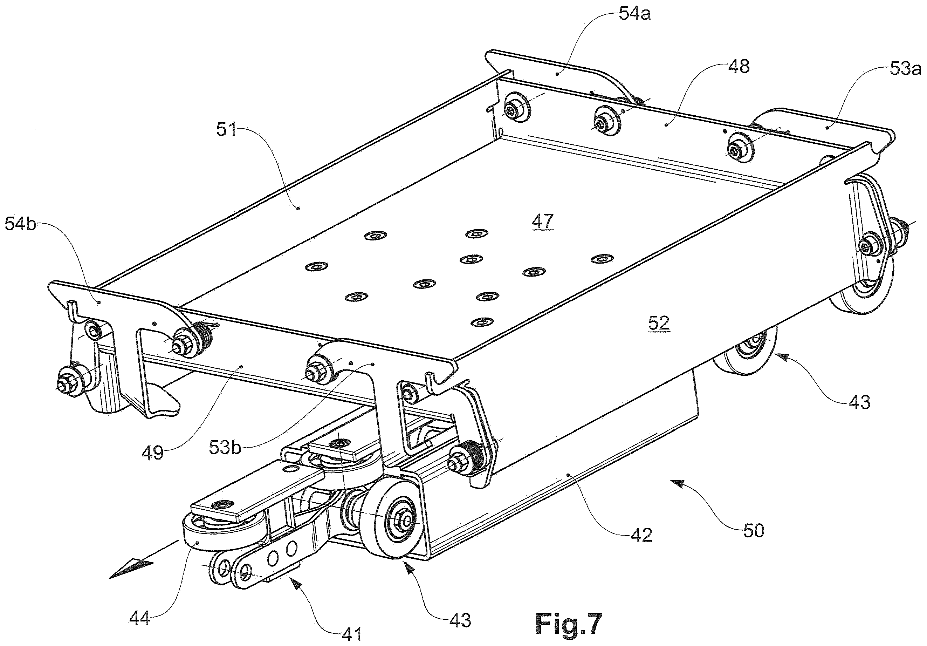

Im Beispiel der Figur 3 ist der Förderer 35 mit Transportschalen (50 in Figur 7) bestückt, in denen das Lagergut (in Behältern) transportiert werden kann, und die zu beiden Seiten abkippbar sind, um transportiertes Lagergut zu entladen. Das Beladen der Lagerschalen 50 ist in Figur 3 aus Gründen der Übersichtlichkeit nicht gezeigt. Dazu muss das in den Behältern untergebrachte Lagergut von den Regalbediengeräten 36, 38 über den Rand der Schale gehoben oder, bei geöffneter Seitenwand (51, 52 in Figur 7), in die Schale eingeschoben werden.

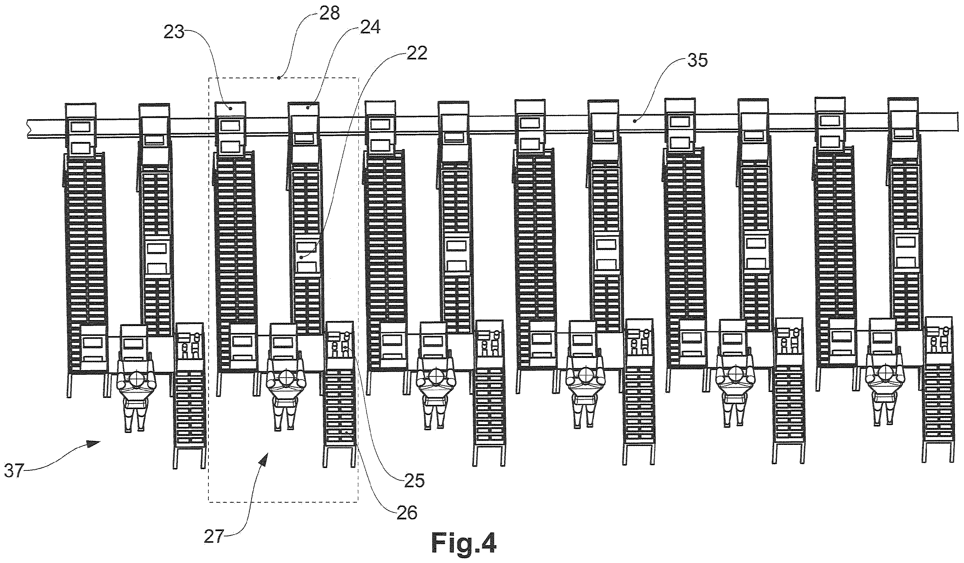

Die Kommissionierungseinheit 37 der Figur 3 ist in Figur 4 in der Draufsicht von oben in vergrösserter Darstellung wiedergegeben. Im dargestellten Beispiel sind in der Kommissionierungseinheit 37 in Laufrichtung des Förderers 35 nebeneinander insgesamt sechs Kommissionierungsplätze 28 angeordnet und an den Förderer 35 angeschlossen. Innerhalb jedes Kommissionierungsplatzes 28 sind parallel zueinander eine Übernahmevorrichtung 23 zum Übernehmen der Lagerbehälter 22 mit dem Lagergut von dem Förderer 35 und eine Übergabevorrichtung 24 zum Übergeben der entleerten Lagerbehälter 22 auf den Förderer 35 angeordnet. Übernahmevorrichtung 23 und Übergabevorrichtung 24 sind im Beispiel als Rollenbahnen ausgeführt, können aber auch andere Fördertechniken benutzen.

Eine Bedienperson 27 entnimmt aus dem über die Übernahmevorrichtung 23 ankommenden Lagerbehälter 22 die gewünschten Waren und stellt den Lagerbehälter 22 dann auf die Übergabevorrichtung 24, die den Lagerbehälter 22 zurück auf den Förderer 35 transportiert. Die entnommenen Waren werden in einer Warenzusammenstellung 25 gesammelt und dann über eine Ausgabevorrichtung 26, die ebenfalls als Rollenbahn ausgebildet sein kann, zur Weiterverarbeitung nach aussen abgegeben. Insgesamt wird die Auslagerung des Lagergutes bzw. der eingelagerten Waren von einer (nicht gezeigten) zentralen Steuerung, die auf die Regalbediengeräte 19, 20, 21 und 36, 38 sowie den Förderer 15, 35 einwirkt, derart gesteuert, dass an den Kommissionierungsplätzen 28 die gewünschten Waren für die jeweilige Warenzusammenstellung 25 zeitlich koordiniert zur Verfügung stehen.

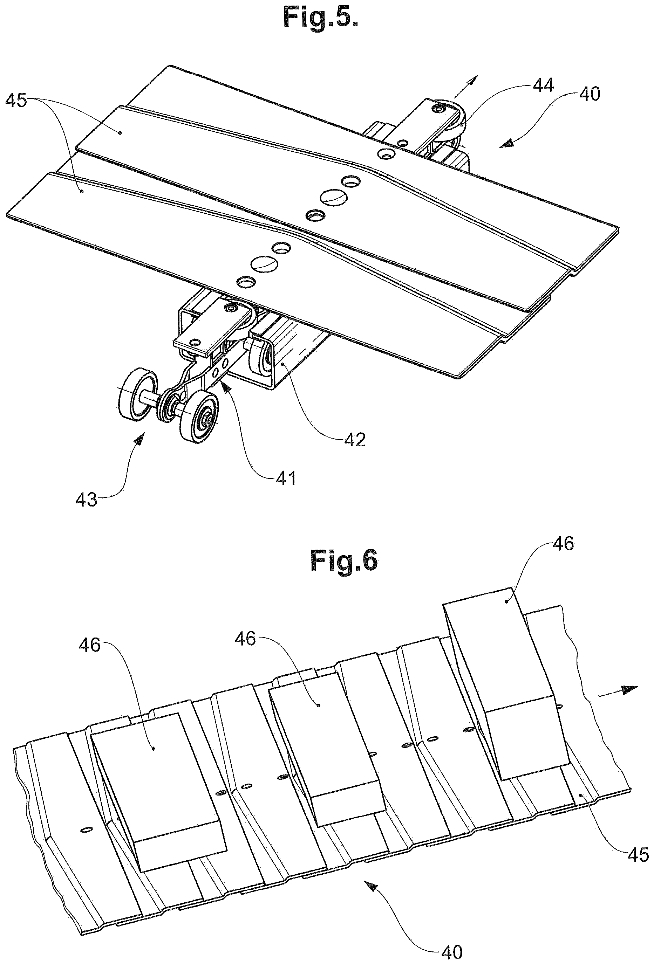

Beispiele für die konkrete Ausbildung des Förderers 15 bzw. 35 sind in den Figuren 5, 6 und 7 wiedergegeben. Entsprechende Ausbildungen sind aus der eingangs genannten Druckschrift CH 710 851 A1 bekannt. Im Beispiel der Figuren 5 und 6 ist als Förderer ein Transportband 40 gezeigt, bei dem eine endlose Förderkette 41 mit Paaren von Laufrollen 43 und Führungsrollen 44 für die seitliche Führung geschützt in einer oben offenen Laufschiene 42 läuft. Die oben aus der Laufschiene 42 herausstehende Förderkette 41 trägt oberhalb der Laufschiene 42 an der Förderkette 41 zentral angeschraubte, schuppenartig übereinander greifende Platten 45, die ein breites Tragband bilden und sich in Kurven relativ zueinander verdrehen können. Auf ein derart ausgebildetes Transportband 40 kann gemäss Figur 6 das Lagergut, z.B. in Form von Paketen 46, aufgelegt und aus den Hochregalen 31-34 zur Kommissionierungseinheit 37 gefördert werden.

Eine andere Ausbildung, die auch in Figur 3 angedeutet ist, verwendet die in Figur 7 gezeigten Transportschalen 50, die ebenfalls auf der Oberseite der bereits aus Figur 5 bekannten Förderkette 41 befestigt sind. Die rechteckigen Transportschalen 50 haben einen ebenen Boden 47 sowie eine quer zur Laufrichtung angeordnete Vorderwand 49 und Rückwand 48. An vorderwand 49 und Rückwand 48 sind aussen Rasthaken 53a,b und 54a,b verschwenkbar angebracht, die hinter seitlich abklappbaren Seitenwänden 51, 52 einrasten und bei Bedarf durch neben der Laufschiene 42 angeordnete Kulissenelemente beim Überfahren durch die Transportschale 50 entriegelt werden, so dass die betreffende durch Federn vorgespannte Seitenwand abklappt und ein Herausrutschen des Inhalts der Transportschale 50 ermöglicht. Hierzu wird Transportschale 50 zur entriegelten Seite hin verkippt, wie dies in der Druckschrift CH 710 851 A1 näher beschrieben ist.

Beim Befüllen der Transportschale 50 kann das einzufüllende Lagergut entweder über den geschlossenen Rand gehoben werden, oder die abklappbaren Seitenwände 51, 52 werden einseitig oder zweiseitig entriegelt und abgeklappt und dass Lagergut dann in die Schale geschoben, wonach die Seitenwände wieder aufgestellt und verriegelt werden.

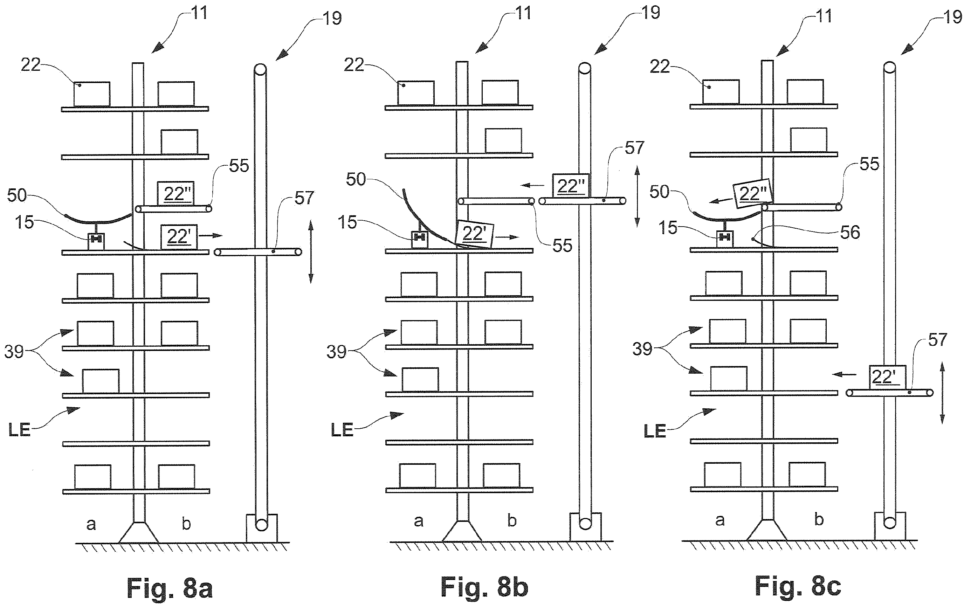

In Figur 8a ist zum Befüllen der Transportschalen 50 in einer Zwischenebene als Zwischenförderer ein zusätzlicher Bandförderer 55 angeordnet. Der Bandförderer 55 kann gemäss Figur 8b vom Regalbediengerät 19 mit einem auszulagernden Lagerbehälter 22" beschickt werden, der dann gemäss Figur 8c mit dem Bandförderer 55 von oben in die Transportschale 50 hineingegeben wird.

Unterhalb des Bandförderers 55 kann zum Einlagern eines Lagerbehälters 21' eine Rutsche (56 in Figur 8c) angeordnet sein, die beim Auskippen der Transportschale 50 gemäss Figur 8b den Lagerbehälter 22' an einen Lagerplatz rutschen lässt, von dem aus er gemäss Figur 8a vom Regalbediengerät 19 aufgenommen werden kann, um anschliessend am einen bestimmten Lagerplatz eingebracht zu werden (Figur 8c).

Im Ausführungsbeispiel der Figuren 8a, 8b, 8c ist die Transfervorrichtung 57, mit welcher ein Regalbediengerät 19 ein Objekt 22 von einem Lagerplatz im Hochregal 11 übernimmt oder das Objekt 22 an einen Lagerplatz im Hochregal 11 platziert, als Bandfördervorrichtung realisiert. Die am besten geeignete Transfervorrichtung hängt dabei jedoch von der Art des Lagerbehälters und des Hochregalsystems ab.

Für Lagerobjekte mit nicht standardisierter Form, beispielsweise Pakete, ist die Einlagerung in ein Lagersystem schwieriger. Das gleiche gilt auch für die Übernahme solcher Lagerobjekte vom Förderer bzw. die Übergabe der Lagerobjekte an den Förderer. Ebenfalls schwieriger ist das Handling von Lagerobjekten, unabhängig von deren Form, bei Fördersystemen, bei welchen Position und Ausrichtung der geförderten Lagerobjekte nicht vorgegeben ist und variieren kann. Als Beispiel ist hier das Transportband aus den Figuren 5 und 6 zu nennen, bei welchem die Lage des Lagerobjekts auf dem Transportband aber auch die Ausrichtung sich während dem Transport verschieben kann.

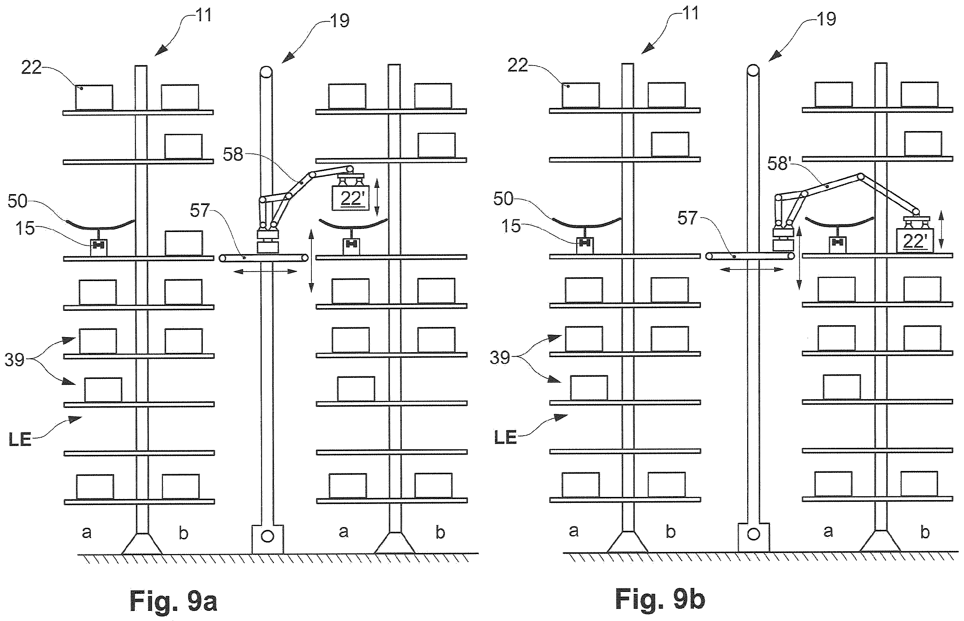

Die Figur 9a zeigt ein erfindungsgemässes Lagersystem, bei welchem die Transfervorrichtung 57 zum Handling der ein- und auszulagernden Objekte eine quer zur Lagergasse verschiebbare Robotervorrichtung 58 umfasst (schematisch dargestellt), mit einem Auslegerarm und einer Greifvorrichtung zum Greifen und Positionieren eines Lagerbehälters. Die Robotervorrichtung kann Lagerbehälter 22' aus einer Transportschale 50 des Förderers 15 aufnehmen bzw. in diese ablegen. Analog kann die das Regalbediengerät 19 mit der Robotervorrichtung Lagerbehälter 22 an den gewünschten Positionen des Hochregals links und rechts der Lagergasse aufnehmen und deponieren. Da in dieser Ausführungsform der Erfindung neben dem Förderer kein Platz für die temporäre Lagerung entladender bzw. zu verladender Lagerbehälter benötigt wird, sind alle Lagerplätze des Hochregals nutzbar. Je nach Geometrie der Robotervorrichtung kann es notwendig sein, in der Lagerebene des Förderers den Abstand zur nächsthöheren Lagerebene grösser zu wählen als bei den übrigen Lagerebenen.

Die Figur 9b zeigt eine weitere Ausführungsform eines erfindungsgemässen Lagersystems, bei welchem der Auslegerarm der Robotervorrichtung 58 länger ausgeführt ist als in der Figur 9a. Der längere Auslegerarm in Verbindung mit der transversalen Verschiebbarkeit der Robotervorrichtung erlaubt es, wie in Figur 9b gezeigt, auch den Lagerbehälter 22' auf der Seite der Transfervorrichtung 57 abgewandten Seite b des rechten Hochregals zu erreichen, bzw. den Förderer 15 auf der abgewandten linken Seite a des linken Hochregals. Dies erlaubt einen noch flexibleren und effizienteren Zugriff auf das Hochregal, da beispielsweise einzelne Lagerbehälter über drei Lagergassen hinweg übergeben werden können, und die Transfereinheit 57 einer Lagergasse Zugriff auf jeweils zwei Teilstrecken des Förderers 15 hat.

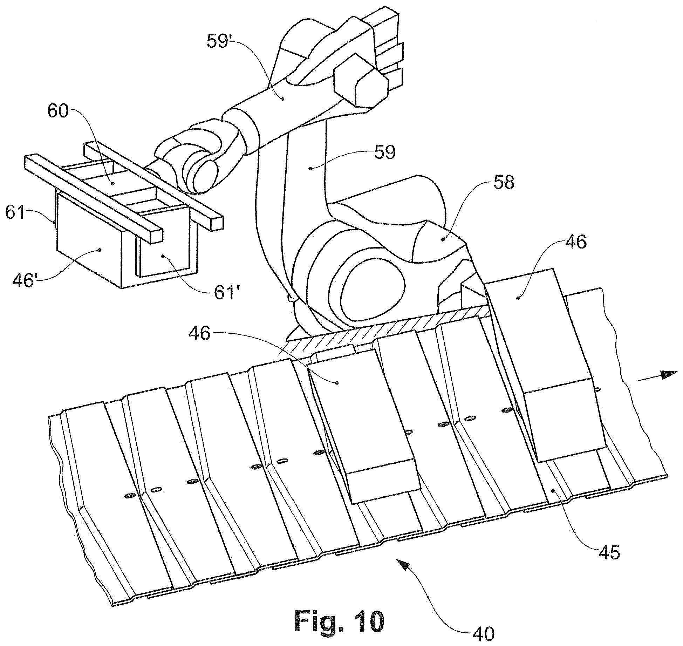

Noch eine weitere Ausführungsvariante ist Figur 10 dargestellt. Eine Robotervorrichtung 58 der Transfervorrichtung eines Regalbediengeräts umfasst einen mehrteiligen, über Gelenke schwenkbar beweglichen Arbeitsarm 59, 59' mit einer daran distal angeordneten Greifvorrichtung 60 für kubische Objekte, beispielsweise Pakete 46, 46'. Die lediglich schematisch dargestellte Greifvorrichtung kann mit zwei transversal verschiebbaren Greifplatten ein auf dem in Form eines Transportbands 40 ausgestalteten Förderer gefördertes Paket 46' seitlich greifen, um es anschliessend am gewünschten Ort im Lagerregal zu deponieren, bzw. am Lagerplatz greifen, um es anschliessend auf dem Förderer zu deponieren.

## Patentansprüche

1. Lagersystem (10, 30), umfassend eine Mehrzahl von Lagerplätzen (39) zur Aufnahme von Lagergut (22, 46), welche in wenigstens einer Lagerebene (LE) angeordnet sind, und ein oder mehrere zugehörige Handlinggeräte (19, 20, 21; 36, 38), mit welchen die Lagerplätze angefahren werden können, um Lagergut (22, 46) an den Lagerplätzen einzulagern oder von diesen Lagerplätzen auszulagern;
wobei zum Einlagern und Auslagern des Lagerguts (22, 46) weiter ein Förderer (15, 35) vorgesehen ist, welcher als Endlosförderer ausgebildet ist, der eine stetig geschlossene Schlaufe bildet und welcher auf mindestens einer Lagerebene (LE) durch die Anordnung der Lagerplätze (39) geführt ist;
wobei die Lagerplätze auf übereinander liegenden Lagerebenen in Hochregalen (11, 12, 13, 14; 31, 32, 33, 34) angeordnet sind, welche unter Ausbildung von Lagergassen (29) mit Abstand nebeneinander stehen, wobei in den Lagergassen (29) zwischen den Hochregalen als Handlinggeräte horizontal und vertikal verfahrbare Regalbediengeräte (19, 20, 21; 36, 38) vorgesehen sind, mit welchen jeder der Lagerplätze (39) zum Einlagern und/oder Auslagern von Lagergut (22,46) angefahren werden kann, und wobei der Förderer (15,35) wenigstens einmal auf einer Lagerebene (LE) durch die Hochregale (11,12,13,14,31,32,33,34) geführt ist;
wobei die Hochregale (11,12,13,14,31,32,33,34) quer zur Lagergasse (29) in einer Lagerebene (LE) jeweils zwei hintereinander angeordnete Lagerplätze (39) aufweisen; wobei der Förderer (15,35) auf der jeweiligen Lagerebene (LE) parallel zur Lagergasse (29) durch das jeweilige Hochregal (11,12,13,14,31,32,33,34) geführt ist, **dadurch gekennzeichnet, dass** in den Lagerebenen (LE), auf denen der Förderer (15,35) durch das jeweilige Hochregal (11,12,13,14,31,32,33,34) geführt ist, neben dem Förderer (15,35) nur eine Reihe von Lagerplätzen (39) vorgesehen ist.

2. Lagersystem nach Anspruch 1, **dadurch gekennzeichnet, dass** das Lagersystem (10, 30) mindestens eine Kommissionierungseinheit (17, 37) zur individuellen Zusammenstellung ausgelagerter Lagergüter (22, 46) umfasst, und dass der Förderer (15, 35) an der Kommissionierungseinheit (17, 37) entlang bzw. durch die Kommissionierungseinheit (17, 37) hindurchgeführt ist.

3. Lagersystem nach Anspruch 1 oder 2, **dadurch gekennzeichnet, dass** das Lagersystem (10, 30) mindestens eine Übergabestation (16) zur Eingabe von einzulagernden Lagergütern (22, 46) in das Lagersystem (10, 30) umfasst, und dass der Förderer (15, 35) an der Übergabestation (16) entlang bzw. durch die Übergabestation (16) hindurchgeführt ist.

4. Lagersystem nach Anspruch 1, **dadurch gekennzeichnet, dass** die Lagerebenen (LE), durch welche der Förderer (15, 35) geführt ist, sich etwa auf halber Höhe der Hochregale (11, 12, 13, 14; 31, 32, 33, 34) befinden.

5. Lagersystem nach einem der Ansprüche 1 bis 4, **dadurch gekennzeichnet, dass** die Handlinggeräte (19, 20, 21; 36, 38) so ausgebildet und angeordnet sind, dass sie Lagergut (22, 46) von jedem der Lagerplätze (39) abholen und an den Förderer (15, 35) übergeben können.

6. Lagersystem nach einem der Ansprüche 1 bis 5, **dadurch gekennzeichnet, dass** zur Übergabe von Lagergut (22, 46) von einem Handlinggerät (19, 20, 21; 36, 38) an den Förderer (15, 35) wenigstens ein Zwischenförderer (55) vorgesehen ist, welcher das Lagergut (22, 46) vom Handlinggerät (19, 20, 21; 36, 38) übernimmt und auf den Förderer (15, 35) weiterbefördert.

7. Lagersystem nach Anspruch 6, **dadurch gekennzeichnet, dass** der wenigstens eine Zwischenförderer (55) antreibbar ist.

8. Lagersystem nach einem der Ansprüche 1 bis 7, **dadurch gekennzeichnet, dass** die Handlinggeräte (19, 20, 21; 36, 38) so ausgebildet und angeordnet sind, dass sie Lagergut (22, 46) von dem Förderer (15, 35) übernehmen und zu jedem der Lagerplätze (39) des Lagersystems (10, 30) transportieren und dort ablegen können.

9. Lagersystem nach einem der Ansprüche 1 bis 8, **dadurch gekennzeichnet, dass** der Förderer (15, 35) eine endlos umlaufende, stetig geschlossene Schlaufe bildende Förderkette (41) umfasst, an der Vorrichtungen (45, 50) zur Aufnahme von Lagergut (22, 46) befestigt sind.

10. Verfahren zum Betreiben eines Lagersystems nach Anspruch 1, wobei zum Einlagern von Lagergut (22, 46) im Lagersystem (10, 30) das Lagergut (22, 46) mit dem Förderer (15, 35) in die dem Förderer (15, 35) zugeordnete Lagerebene (LE) des jeweiligen Hochregals (11, 12, 13, 14; 31, 32, 33, 34) transportiert und dort im Hochregal abgelegt und bei Bedarf mit einem der Handlinggeräte (19, 20, 21; 36, 38) in eine andere Lagerebene und/oder ein anderes Hochregal verlagert wird, und dass zum Auslagern von Lagergut (22, 46) das Lagergut (22, 46) mit einem der Handlinggeräte (19, 20, 21; 36, 38) von seinem Lagerplatz (39) im Hochregal in eine dem Förderer (15, 35) zugeordnete Lagerebene (LE) transportiert und dort auf den Förderer (15, 35) aufgebracht wird.

11. Verfahren nach Anspruch 10, **dadurch gekennzeichnet, dass** zum Auslagern von Lagergut (22, 46) das Lagergut (22, 46) mit einem der Handlinggeräte (19, 20, 21; 36, 38) in der dem Förderer (15, 35) zugeordneten Lagerebene (LE) zunächst auf einem Zwischenplatz (55) abgelegt wird.

12. Verfahren nach einem der Ansprüche 10 oder 11, **dadurch gekennzeichnet, dass** das ausgelagerte Lagergut (22, 46) mit dem Förderer (15, 35) zu einer Kommissionierungseinheit (17, 37) transportiert und dort vom Förderer (15, 35) abgenommen und im Rahmen einer Kommissionierung weiterverarbeitet wird.

13. Verfahren nach einem der Ansprüche 10 bis 12, **dadurch gekennzeichnet, dass** der Förderer (15, 35) zur Zwischenlagerung von einzulagerndem und/oder ausgelagertem Lagergut (22, 46) verwendet wird.

14. Verfahren nach Anspruch 13, **dadurch gekennzeichnet, dass** das ausgelagerte Lagergut (22, 46) auf dem Förderer (15, 35) in einer für die nachfolgende Kommissionierung optimierten Reihenfolge zwischengelagert wird.

15. Verfahren nach einem der Ansprüche 10 bis 14, **dadurch gekennzeichnet, dass** zur Lagerung des Lagerguts (46) normierte Lagerbehälter (22) verwendet werden, in welchen das Lagergut (46) im Lagersystem (10, 30) eingelagert wird, und dass zum Einlagern bzw. Auslagern die Lagerbehälter (22) von den Handlinggeräten (19, 20, 21; 36, 38) aus den Lagerplätzen (39) entnommen, mittels des Förderers (15, 35) zum Beladen bzw. Entladen transportiert und nach dem Beladen bzw. Entladen wieder zu einem der Lagerplätze (39) zurückgebracht werden.

16. Verfahren nach einem der Ansprüche 10 bis 15, **dadurch gekennzeichnet, dass** das Ablegen des Lagerguts (22, 46) auf einem Lagerplatz (39) vom Förderer (15, 35) herunter durch ein schwerkraftgestütztes Ab- bzw. Auskippen erfolgt.

17. Verfahren nach Anspruch 11, **dadurch gekennzeichnet, dass** das Lagergut (22, 46) vom Zwischenplatz (55) geordnet auf den Förderer (15, 35) übergeben wird.

## Claims

1. A storage system (10, 30), comprising a plurality of storage bays (39) for receiving storable goods (22, 46), the storage bays being arranged in at least one storage level (LE), and one or more associated handling devices (19, 20, 21; 36, 38), with which the storage bays can be accessed in order to store storable goods (22, 46) in the storage bays or retrieve them from these storage bays;
wherein for storing and retrieving the storable goods (22, 46), in addition a conveyor (15, 35) is provided, which is designed as a continuous conveyor that forms a continuously closed loop, and which is led on at least one storage level (LE) through the arrangement of the storage bays (39);
wherein the storage bays are arranged on superposed storage levels in high racks (11, 12, 13, 14; 31, 32, 33, 34) that are spaced apart from one another, thereby forming rack aisles (29), wherein horizontally and vertically movable rack storage and retrieval units (19, 20, 21; 36, 38) are provided as handling devices in the rack aisles between the high racks, with which each of the storage bays (39) can be accessed for storing and/or retrieving storable goods (22, 46), and wherein the conveyor (15, 35) is led at least once through the high racks (11, 12, 13, 14; 31, 32, 33, 34) on a storage level (LE);
wherein in a storage level (LE) the high racks (11, 12, 13, 14; 31, 32, 33, 34) in each case have two storage bays (39) arranged one behind the other, transverse to the rack aisle (39),
wherein the conveyor (15, 35) is led on the particular storage level (LE) through the particular high rack (11, 12, 13, 14; 31, 32, 33, 34), in parallel to the rack aisle (29), **characterized in that** in the storage levels (LE) on which the conveyor (15, 35) is led through the particular high rack (11, 12, 13, 14; 31, 32, 33, 34), only one row of storage bays (39) is provided beside the conveyor (15, 35).

2. The storage system according to Claim 1, **characterized in that** the storage system (10, 30) includes at least one order picking unit (17, 37) for individually combining retrieved storable goods (22, 46), and **in that** the conveyor (15, 35) is led along the order picking unit (17, 37), or through the order picking unit (17, 37), respectively.

3. The storage system according to Claim 1 or 2, **characterized in that** the storage system (10, 30) comprises at least one transfer station (16) for the insertion of storable goods (22, 46) to be stored into the storage system (10, 30), and **in that** the conveyor (15, 35) is led along the transfer station (16), or through the transfer station (16), respectively.

4. The storage system according to Claim 1, **characterized in that** the storage levels (LE) through which the conveyor (15, 35) is led are situated at approximately one-half of the height of the high racks (11, 12, 13, 14; 31, 32, 33, 34).

5. The storage system according to one of Claims 1 to 4, **characterized in that** the handling devices (19, 20, 21; 36, 38) are designed and arranged in such a way that they can retrieve storable goods (22, 46) from each of the storage bays (39) and transfer them to the conveyor (15, 35).

6. The storage system according to one of Claims 1 to 5, **characterized in that** for transferring storable goods (22, 46) from a handling device (19, 20, 21; 36, 38) to the conveyor (15, 35), at least one intermediate conveyor (55) is provided that takes over the storable goods (22, 46) from the handling device (19, 20, 21; 36, 38) and further transports them onto the conveyor (15, 35).

7. The storage system according to Claim 6, **characterized in that** the at least one intermediate conveyor (55) is drivable.

8. The storage system according to one of Claims 1 to 7, **characterized in that** the handling devices (19, 20, 21; 36, 38) are designed and arranged in such a way that they can take over storable goods (22, 46) from the conveyor (15, 35) and transport them to each of the storage bays (39) of the storage system (10, 30) and deposit them there.

9. The storage system according to one of Claims 1 to 8, **characterized in that** the conveyor (15, 35) comprises a continuously circulating conveyor chain (41) that forms a continuously closed loop, to which devices (45, 50) for receiving storable goods (22, 46) are fastened.

10. A method for operating a storage system according to Claim 1, wherein for storing storable goods (22, 46) in the storage system (10, 30), the storable good (22, 46) is transported by the conveyor (15, 35) into the storage level (LE) associated with the conveyor (15, 35) of the particular high rack (11, 12, 13, 14; 31, 32, 33, 34), and there is deposited in the high rack, and as needed is relocated by one of the handling devices (19, 20, 21; 36, 38) into another storage level and/or another high rack, and for retrieving storable goods (22, 46), the storable good (22, 46) is transported by one of the handling devices (19, 20, 21; 36, 38) from its storage bay (39) in the high rack into a storage level (LE) associated with the conveyor (15, 35), and there is placed on the conveyor (15, 35).

11. The method according to Claim 10, **characterized in that** for removing storable goods (22, 46) from storage, the storable good (22, 46) is initially deposited by one of the handling devices (19, 20, 21; 36, 38) at an intermediate location (55) in the storage level (LE) associated with the conveyor (15, 35).

12. The method according to one of Claims 10 or 11, **characterized in that** the retrieved storable good (22, 46) is transported by the conveyor (15, 35) to an order picking unit (17, 37), where it is taken off from the conveyor (15, 35) and further processed within the scope of an order picking operation.

13. The method according to one of Claims 10 to 12, **characterized in that** the conveyor (15, 35) is used for temporarily storing storable goods (22, 46) to be stored and/or retrieved.

14. The method according to Claim 13, **characterized in that** the retrieved storable good (22, 46) is temporarily stored on the conveyor (15, 35) in a sequence that is optimized for the subsequent order picking operation.

15. The method according to one of Claims 10 to 14, **characterized in that** for storing the storable goods (46), standardized storage containers (22) are used, in which the storable goods (46) are stored in the storage system (10, 30), and **in that** for storage or retrieval the storage containers (22) are removed from the storage bays (39) by the handling devices (19, 20, 21; 36, 38), are transported by means of the conveyor (15, 35) to loading or unloading, and after loading or unloading are returned to one of the storage bays (39).

16. The method according to one of Claims 10 to 15, **characterized in that** the storable good (22, 46) is deposited in a storage bay (39) from the conveyor (15, 35) by gravity-assisted tilting or dumping.

17. The method according to Claim 11, **characterized in that** the storable good (22, 46) is transferred from the intermediate location (55) to the conveyor (15, 35) in a sorted manner.

## Revendications

1. Système de stockage (10, 30) comprenant une pluralité d'emplacements de stockage (39), destinés à recevoir des marchandises (22, 46) et disposés à au moins un niveau de stockage (LE), et au moins un dispositif de manutention associé (19, 20, 21 ; 36, 38) qui permettent d'approcher les emplacements de stockage afin de stocker les marchandises (22, 46) aux emplacements de stockage ou de les retirer de ces emplacements de stockage ;
un convoyeur (15, 35) étant en outre prévu pour stocker et retirer les marchandises (22, 46), et lequel convoyeur est conçu comme un convoyeur sans fin qui forme une boucle continue et fermée et qui est guidé à au moins un niveau de stockage (LE) par l'agencement des emplacements de stockage (39) ;
les emplacements de stockage étant disposés à des niveaux de stockage superposés dans des rayonnages hauts (11, 12, 13, 14, 31, 32, 33, 34) qui sont disposés à distance les uns à côté des autres de façon à former des voies de stockage (29), des transstockeurs (19, 20, 21 ; 36, 38) mobiles horizontalement et verticalement étant prévu comme dispositifs de manutention aux voies de stockage entre les rayonnages hauts, lesquels transstockeurs permettent d'approcher chacun des emplacements de stockage (39) pour stocker et/ou retirer les marchandises (22, 46), et le convoyeur (15, 35) étant guidé au moins une fois à un niveau de stockage (LE) travers les rayonnages hauts (11, 12, 13, 14, 31, 32, 33, 34) ;
les rayonnages hauts (11, 12, 13, 14, 31, 32, 33, 34) comportant chacun transversalement à la voie de stockage (29), à un niveau de stockage (LE), deux emplacements de stockage (39) disposés l'un derrière l'autre ;
le convoyeur (15, 35) étant guidé au niveau de stockage respectif (LE), parallèlement à la voie de stockage (29), à travers le rayonnage haut respectif (11, 12, 13, 14, 31, 32, 33, 34), **caractérisé en ce que** une seule rangée d'emplacements de stockage (39) est prévue, en plus du convoyeur (15, 35), aux niveaux de stockage (LE), sur lesquels le convoyeur (15, 35) est guidé à travers le rayonnage haut respectif (11, 12, 13, 14, 31, 32, 33, 34).

2. Système de stockage selon la revendication 1, **caractérisé en ce que** le système de stockage (10, 30) comporte au moins une unité de préparation de commandes (17, 37) destiné à regrouper individuellement des marchandises retirées (22, 46), et **en ce que** le convoyeur (15, 35) est guidé le long de l'unité de préparation de commandes (17, 37) ou à travers l'unité de préparation de commandes (17, 37).

3. Système de stockage selon la revendication 1 ou 2, **caractérisé en ce que** le système de stockage (10, 30) comporte au moins un poste de transfert (16) destiné à introduire des marchandises à stocker (22, 46) dans le système de stockage (10, 30), et **en ce que** le convoyeur (15, 35) est guidé le long du poste de transfert (16) ou à travers le poste de transfert (16).

4. Système de stockage selon la revendication 1, **caractérisé en ce que** les niveaux de stockage (LE), à travers lesquels le convoyeur (15, 35) est guidé, sont situés approximativement à mi-hauteur des rayonnages hauts (11, 12, 13, 14 ; 31, 32, 33, 34).

5. Système de stockage selon l'une des revendications 1 à 4, **caractérisé en ce que** les dispositifs de manutention (19, 20, 21, 36, 38) sont conçus et disposés de manière à pouvoir aller chercher les marchandises (22, 46) dans chacun des emplacements de stockage (39) et les transférer au convoyeur (15, 35).

6. Système de stockage selon l'une des revendications 1 à 5, **caractérisé en ce qu'**au moins un convoyeur intermédiaire (55) est prévu pour transférer des marchandises (22, 46) d'un dispositif de manutention (19, 20, 21 ; 36, 38) au convoyeur (15, 35), lequel convoyeur intermédiaire prend en charge les marchandises (22, 46) sur le dispositif de manutention (19, 20, 21, 36, 38) et l'amène sur le convoyeur (15, 35).

7. Système de stockage selon la revendication 6, **caractérisé en ce que** l'au moins un convoyeur intermédiaire (55) est entraînable.

8. Système de stockage selon l'une des revendications 1 à 7, **caractérisé en ce que** les dispositifs de manutention (19, 20, 21 ; 36, 38) sont conçus et disposé de manière à prendre en charge les marchandises (22, 46) sur le convoyeur (15, 35) et à les transporter vers chacun des emplacements de stockage (39) du système de stockage (10, 30) et les déposer auxdits emplacements de stockage.

9. Système de stockage selon l'une des revendications 1 à 8, **caractérisé en ce que** le convoyeur (15, 35) comprend une chaîne de convoyage (41) formant une boucle continue et fermée en permanence en circulation à laquelle sont fixés des dispositifs (45, 50) destinés à recevoir des marchandises (22, 46).

10. Procédé de fonctionnement d'un système de stockage selon la revendication 1, pour stocker des marchandises (22, 46) dans le système de stockage (10, 30), les marchandises (22, 46) étant transportés avec le convoyeur (15, 35) audit niveau de stockage (LE), associé au convoyeur (15, 35), de chaque rayonnage haut (11, 12, 13, 14 ; 31, 32, 33, 34), où elles sont déposées dans le rayonnage haut et, si nécessaire, elles sont déplacées à l'aide de l'un des dispositifs de manutention (19, 20, 21 ; 36, 38) vers un autre niveau de stockage et/ou un autre rayonnage haut et, pour retirer les marchandises (22, 46), les marchandises (22, 46) étant transportées à l'aide de l'un des dispositifs de manutention (19, 20, 21 ; 36, 38) de leur emplacement de stockage (39) dans le rayonnage haut jusqu'au niveau de stockage (LE) associé au convoyeur (15, 35) où elles sont placées sur le convoyeur (15, 35).

11. Procédé selon la revendication 10, **caractérisé en ce que** pour retirer les marchandises (22, 46), les marchandises (22, 46) sont d'abord déposées à un emplacement intermédiaire (55) au niveau de stockage (LE) associé au convoyeur (15, 35) à l'aide de l'un des dispositifs de manutention (19, 20, 21 ; 36, 38).

12. Procédé selon l'une des revendications 10 ou 11, **caractérisé en ce que** les marchandises retirées (22, 46) sont transportées à l'aide du convoyeur (15, 35) vers une unité de préparation de commandes (17, 37) où elles sont enlevées du convoyeur (15, 35) et traitées ultérieurement dans le cadre d'une préparation de commandes.

13. Procédé selon l'une des revendications 10 à 12, **caractérisé en ce que** le convoyeur (15, 35) est utilisé pour stocker temporairement les marchandises à stocker et/ou retirer (22, 46).

14. Procédé selon la revendication 13, **caractérisé en ce que** les marchandises retirées (22, 46) sont stockées temporairement sur le convoyeur (15, 35) dans un ordre optimisé pour la préparation de commandes suivante.

15. Procédé selon l'une des revendications 10 à 14, **caractérisé en ce que**, pour stocker des marchandises (46), des conteneurs de stockage standardisés (22) sont utilisés dans lesquels sont stockés les marchandises (46) dans le système de stockage (10, 30), et **en ce que**, pour effectuer le stockage ou le retrait, les conteneurs de stockage (22) sont retirés des emplacements de stockage (39) par les dispositifs de manutention (19, 20, 21 ; 36, 38), sont transportés par le convoyeur (15, 35) pour le chargement ou le déchargement et sont ramenés, après le chargement ou le déchargement, à l'un des emplacements de stockage (39).

16. Procédé selon l'une des revendications 10 à 15, **caractérisé en ce que** le dépôt des marchandises (22, 46) à un emplacement de stockage (39) par le convoyeur (15, 35) est effectué par déversement ou basculement sous l'effet de la gravité.

17. Procédé selon la revendication 11, **caractérisé en ce que** les marchandises (22, 46) sont transférées de manière ordonnée de l'emplacement intermédiaire (55) jusque sur le convoyeur (15, 35).
